# FASCICULE DE BREVET EUROPEEN

(11) **EP 2 275 781 B1**
(45) Date de publication et mention de la délivrance du brevet: **28.12.2011**
(21) Numéro de dépôt: 09305685.1
(22) Date de dépôt: 17.07.2009
(51) Int. Cl.: G01D 4/02, G08C 19/02

(54) **Compteur d'énergie à alimentation par un M-bus**
Energiezähler mit Stromversorgung über einen M-Bus
Energy meter powered by an M-bus

(43) Date de publication de la demande: 19.01.2011
(73) Titulaire: Itron France, 92100 Boulogne-Billancourt (FR)
(72) Inventeur: Staub, Frédéric, 71700, TOURNUS (FR); Dury, Hervé, 71850, CHARNAY-LES-MACON (FR)
(74) Mandataire: Hervouet, Sylvie

(56) Documents cités:
- EP-A1- 0 961 122
- EP-A1- 0 986 039
- EP-A1- 2 045 791

## Description

La présente invention concerne le domaine des compteurs d'énergie, notamment des compteurs d'énergie thermique, et plus particulièrement les compteurs d'énergie capables d'échanger des données séries avec un dispositif maître par l'intermédiaire d'un bus M-bus.

Le M-bus (mis pour la terminologie anglo-saxonne « Meter Bus ») est une norme européenne relativement récente permettant la lecture à distance de compteurs d'énergie, notamment de type électrique ou thermique.

Pour permettre l'échange des données séries via le bus M-bus, de tels compteurs d'énergie disposent d'une interface de communication avec le M-bus, cette interface étant aujourd'hui sous la forme d'un composant intégré commercialisé par Texas Instrument sous la référence TSS721 ou TSS721A.

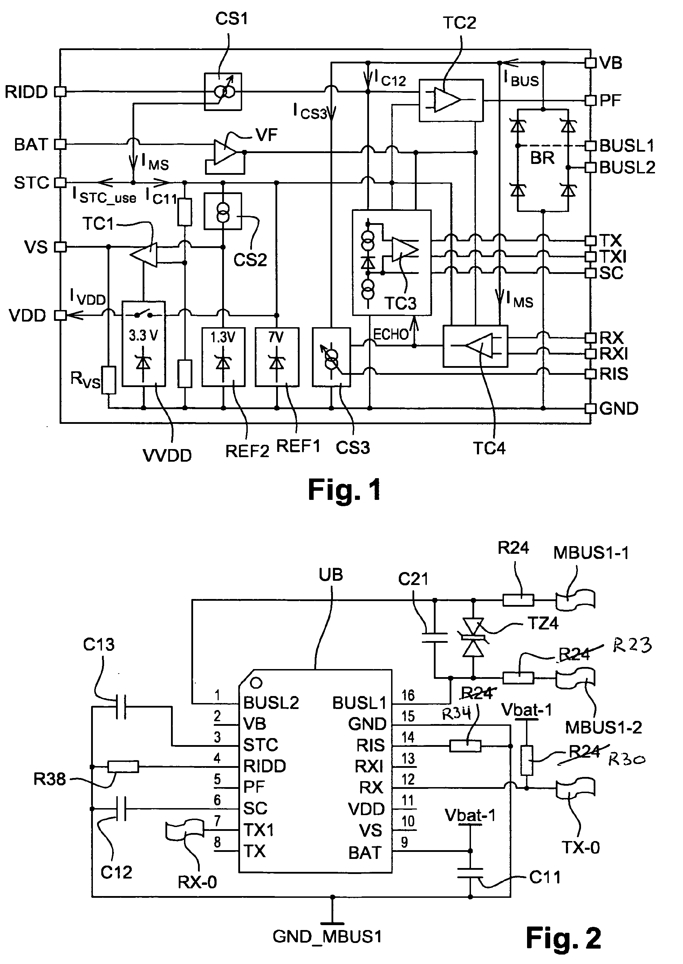

La figure 1 donne un schéma fonctionnel du circuit intégré TSS721 et la figure 2 illustre un exemple d'utilisation d'un tel circuit intégré comme interface pour assurer la conversion de format entre le calculateur d'un compteur d'énergie et un M-bus. Le circuit intégré est doté d'un certain nombre de connexions d'entrée/sortie. Parmi celles-ci, les connexions d'entrée BUSL1 et BUSL2 sont destinées à être reliées aux deux conducteurs formant le M-BUS (non représenté), la connexion de sortie TX est apte à être reliée à la borne de réception RX-0 du microprocesseur du compteur, de préférence par l'intermédiaire d'optocoupleurs permettant une isolation galvanique, de façon à transmettre les données provenant du M-Bus, et la connexion de sortie RX est apte à être reliée à la borne d'émission TX-0 du microprocesseur du compteur, toujours par l'intermédiaire d'optocoupleurs, de façon à permettre la transmission des données depuis le compteur vers le M-Bus.

Les spécifications du circuit intégré TSS721 décrivent un certain nombre de montages possibles et d'utilisations spécifiques de certaines connexions de sortie. En particulier, la norme M-Bus prévoit que le M-bus peut avantageusement être utilisé pour alimenter en puissance le calculateur ou microprocesseur du compteur d'énergie. Pour ce faire, la spécification du circuit intégré TSS721 prévoit d'utiliser la connexion de sortie VDD (voir figure 1) qui délivre une tension régulée à 3,3 Volts.

Dans l'exemple représenté sur la figure 2, la connexion RIDD est reliée à une résistance R38 de 30 KOhms, ce qui correspond à une configuration du circuit intégré à une unité de charge. Ainsi, le circuit intégré est configuré pour un courant de M-bus de 1,5 milli Ampères, et le compteur d'énergie peut disposer d'environ 1,2 milli Ampères, compte tenu de la consommation propre au circuit intégré. En conséquence, la puissance disponible délivrée par le circuit intégré est au maximum de 1,2 x 3,3, soit environ 4 milli Watts.

Cette tension régulée s'avère bien insuffisante pour servir d'alimentation pour des compteurs d'énergie. Même si la consommation moyenne de ces derniers est en principe très inférieure aux 4 milli Watts disponibles, leur consommation instantanée peut être supérieure. D'autre part, pour assurer une certaine autonomie en cas de coupure du BUS, le calculateur peut intégrer d'importantes capacités et super-capacités devant être chargées rapidement, ce qui nécessite une puissance importante.

Une première solution consiste à configurer le circuit intégré à un nombre d'unités de charge supérieur à 1. Néanmoins, le nombre de compteurs d'énergie susceptibles d'être connectés au même M-bus diminue lorsque le nombre d'unités de charge augmente. Ainsi, un compromis reste à faire et l'on recherche à développer des compteurs d'énergie qui ne consomment si possible pas plus de deux unités de charge. Cependant, même avec une configuration à deux unités de charge, soit 3 milli Ampères, la puissance disponible est tout au plus égale à 9 milli Watts, ce qui reste insuffisant pour l'application visée.

En outre, la puissance susceptible d'être délivrée par le circuit intégré TSS721/TSS721A est variable selon les composants et surtout peut être ponctuellement mais significativement réduite, notamment quand le circuit intégré est sollicité pour ses fonctions de communication avec le M-bus.

On connaît par ailleurs du document EP 2 045 791 un dispositif électronique avec un circuit d'interface permettant de communiquer avec une liaison 2 fils, et d'extraire de la puissance d'alimentation pour le dispositif électronique à partir de la liaison 2 fils. D'après ce document, un même convertisseur DC-DC est capable de transmettre un signal d'information provenant d'un détecteur sur la liaison 2 fils en modulant le courant sur la liaison 2 fils, et d'extraire la puissance d'alimentation de la liaison 2 fils.

La présente invention a pour but de proposer une solution permettant, dans le cadre d'un compteur d'énergie à fonctionnalité M-bus dont l'alimentation en puissance est fournie par le M-bus, d'utiliser un maximum de puissance disponible, et de garantir ainsi que le calculateur du compteur d'énergie alimenté par le M-bus, par l'intermédiaire d'un circuit intégré du type composant TSS721/TSS721A, soit rendu opérationnel le plus rapidement possible.

Pour ce faire, la présente invention a pour objet un compteur d'énergie, en particulier compteur d'énergie thermique, apte à échanger des données à distance par l'intermédiaire d'une liaison M-Bus, le compteur d'énergie comprenant un module calculateur susceptible d'être alimenté en puissance par la liaison M-Bus, et un circuit intégré apte d'une part, à servir d'interface de communication entre le module calculateur et la liaison M-Bus, et d'autre part, à délivrer sur une connexion de sortie, un signal de tension continue pour l'alimentation du module calculateur, caractérisé en ce que le compteur d'énergie comporte en outre un module d'alimentation en puissance comprenant un convertisseur DC-DC isolé galvaniquement dont l'entrée est connectée à ladite connexion de sortie et dont le rapport cyclique est régulé par le signal de tension continue.

Le circuit intégré est par exemple du type TSS721/TSSS721A, la connexion de sortie étant alors constituée par la connexion STC du circuit intégré délivrant un signal de tension continue V_{STC},

Le convertisseur DC-DC comporte de préférence un transformateur isolé galvaniquement, un module de commande comportant un moyen interrupteur et un oscillateur commandant l'ouverture et la fermeture du moyen interrupteur selon ledit rapport cyclique, et un amplificateur opérationnel amplifiant l'écart entre la valeur du signal de tension continue et une tension de référence, et dont la sortie délivre une consigne pour la régulation du rapport cyclique au module de commande de manière à adapter le courant appelé en fonction de la valeur du signal de tension continue.

Le compteur d'énergie comporte en outre avantageusement un module de secours se substituant au module d'alimentation en puissance pour pallier les situations dans lesquelles la présence du M-bus n'est pas détectée.

L'invention et les avantages qu'elle procure seront mieux compris au vu de la description suivante, faite en référence aux figures annexées, dans lesquelles :
- la figure 1, précédemment mentionnée, illustre un schéma fonctionnel du circuit intégré TSS721/TSS721A commercialisé par Texas Instrument ;
- la figure 2, précédemment décrite, illustre un exemple d'utilisation du circuit intégré précédent comme interface pour assurer la conversion de format entre le calculateur d'un compteur d'énergie et un M-bus, pour une configuration à une unité de charge ;
- La figure 3 illustre, sous forme de synoptique simplifié, certains aspects de la liaison entre le circuit intégré précédent et le calculateur d'un compteur d'énergie, conformes à la présente invention ;
- La figure 4 illustre schématiquement le principe de l'alimentation conforme à la mise en oeuvre préférée de l'invention.
- la figure 5 donne un exemple de régulation selon le principe de l'invention lors d'une communication entre le compteur et le M-bus ;
- la figure 6 est un diagramme permettant de comparer les performances obtenues par l'invention par rapport à d'autres solutions.

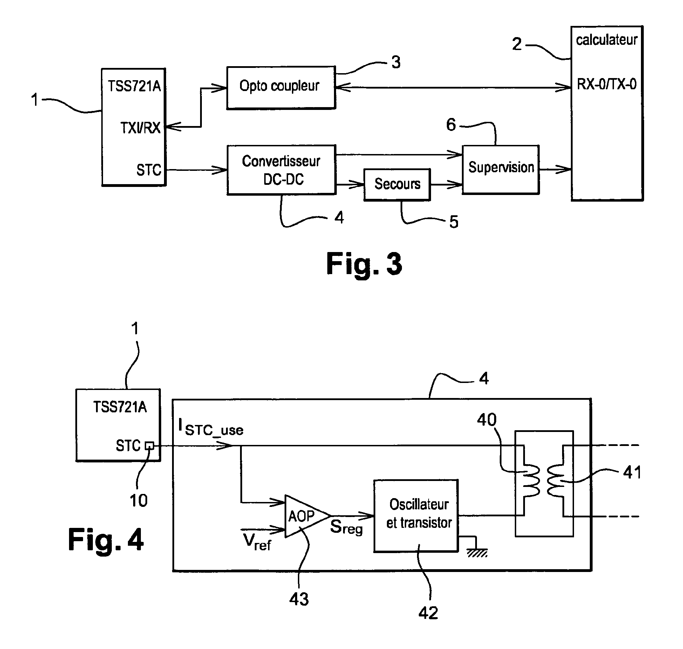

Sur la figure 3, on a représenté sous forme schématique la relation entre un circuit intégré 1 de type TSS721 A et le module calculateur 2 d'un compteur d'énergie thermique conforme à l'invention. Pour la fonction de communication avec le M-Bus (non représenté), les connexions TXI et RX du circuit intégré 1 sont reliées classiquement respectivement aux connexions RX-0 et TX-0 du module calculateur 2 par l'intermédiaire d'optocoupleurs 3 isolés galvaniquement.

Pour ce qui concerne la fonction d'alimentation en puissance en utilisant l'énergie du M-Bus, le compteur d'énergie comporte en outre, conformément à l'invention, un module d'alimentation en puissance comprenant un convertisseur DC-DC 4 isolé galvaniquement, dont l'entrée est connectée à une connexion de sortie du circuit intégré 1 délivrant un signal de tension continue, et dont le rapport cyclique est régulé par le signal de tension continue , comme cela sera expliqué ultérieurement plus en détail. Un module de secours 5, constitué de super condensateurs de stockage, peut en outre avantageusement être utilisé pour constituer une réserve d'énergie se substituant au module d'alimentation 4 dans le cas de défection du Bus sur des durées limitées. Dans ce cas, une alimentation en puissance à 3 Volts est fournie par ce module de secours à la place de l'alimentation en puissance fournie par le convertisseur DC-DC. Un module de supervision 6 permet de fournir au calculateur soit la tension de sortie du convertisseur DC-DC (M-bus présent), soit la tension de sortie à 3 Volts du module de secours 5 (M-Bus absent), et garantit ainsi le fonctionnement correct du calculateur 2 sur une durée limitée même en cas de coupure du M-bus.

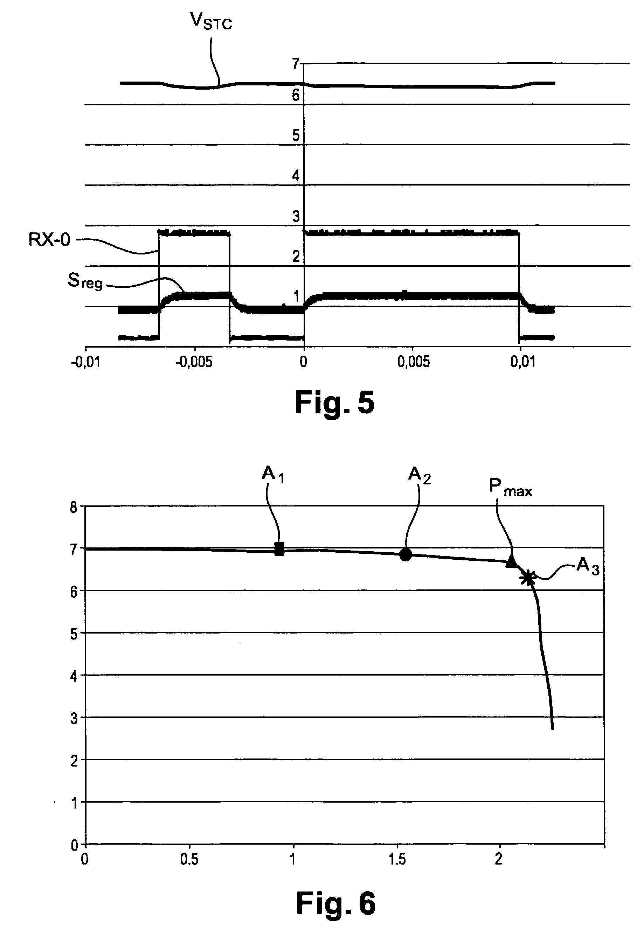

Une mise en oeuvre préférée de l'invention et le détail de la régulation vont à présent être explicités en référence aux figures 4 et 5.

Au préalable, si l'on se réfère à nouveau au schéma fonctionnel de la figure 1, on note que l'énergie disponible en sortie du circuit intégré 1 est fractionnée entre le courant de sortie I_{STC}_ᵤₛₑ sur la connexion STC, et le courant I_{VDD} sur la connexion VDD. Ce courant I_{VDD} est utilisé lors des communications pour l'alimentation des optocoupleurs de la figure 3. Conformément à la mise en oeuvre préférée de l'invention, on va utiliser comme connexion de sortie du circuit intégré 1 connectée à l'entrée du convertisseur 4, la connexion STC délivrant une tension continue de 6,5 Volts au lieu de la connexion VDD préconisée par les spécifications du circuit intégré. Cette caractéristique, combinée à la régulation du rapport cyclique du convertisseur DC-DC 4 en fonction de la tension délivrée sur la sortie STC permet d'obtenir une puissance utilisable en sortie du circuit intégrée très proche du maximum de puissance que peut fournir le circuit intégré.

La régulation du rapport cyclique du convertisseur DC-DC en fonction de la tension délivrée sur la connexion STC va à présent être explicitée en référence aux figures 4 et 5:

Sur la figure 4, on a représenté sous forme de synoptique fonctionnel les composantes principales du convertisseur DC-DC 4 selon l'invention. Ce convertisseur DC-DC utilise classiquement un transformateur illustré par son enroulement primaire 40 et son enroulement secondaire 41. L'utilisation du transformateur garantit l'isolation galvanique nécessaire à l'application. Le convertisseur 4 dispose également classiquement en amont de l'enroulement primaire 40, d'un module de commande 42 comportant un moyen interrupteur, typiquement un transistor, et un oscillateur commandant l'ouverture et la fermeture du transistor selon un rapport cyclique donné. Conformément à l'invention, le convertisseur 4 comporte en outre des moyens 43 permettant de réguler le rapport cyclique en fonction de la tension continue présente sur la sortie STC. Ces moyens 43 sont réalisés ici par un amplificateur opérationnel qui amplifie l'écart entre la valeur de la tension de sortie et une tension de référence V_{ref}, et dont la sortie S_{reg} délivre en conséquence une consigne pour la régulation du rapport cyclique au module de commande 42. Ainsi, on surveille en permanence la tension disponible sur la connexion STC, et on adapte le courant appelé par l'alimentation en modulant le temps d'ouverture du transistor en fonction de cette tension disponible.

Lors des rares appels de courant sur la connexion VDD, le courant I_{STC-use} va diminuer et la tension V_{STC} va passer en deçà de la valeur seuil V_{ref}. Le convertisseur DC-DC va alors s'adapter en réduisant son rapport cyclique, typiquement en réduisant le temps de fermeture des interrupteurs de commande du primaire du transformateur, de façon à appeler moins de courant. A l'inverse, lorsque la tension V_{STC} repasse au-dessus du seuil V_{ref}, le rapport cyclique du convertisseur DC-DC va augmenter, typiquement en augmentant le temps de fermeture des interrupteurs de commande, permettant d'appeler plus de courant.

L'invention tire ainsi partie du fait que, le circuit TSS721A étant déjà lui- même une source à courant limité, il est possible d'utiliser la chute de tension consécutive à l'utilisation du courant maximum disponible pour réguler le convertisseur. Ainsi, le courant utilisé est toujours le maximum qui soit disponible : si le courant disponible se réduit, comme tors d'une communication avec le M-bus, la régulation réduit le courant appelé.

La figure 5 illustre un exemple de variations des signaux lors de la réception d'une communication par le module calculateur 2. Plus précisément, la courbe référencée RX-0 illustre le signal reçu sur la connexion de réception RX-0 du module calculateur 2, la courbe référencée V_{STC} illustre les variations correspondantes de la tension continue sur la connexion de sortie STC, et la courbe S_{reg} représente les variations correspondantes de la tension de sortie de l'amplificateur opérationnel agissant sur l'oscillateur de commande des interrupteurs associés au primaire du transformateur, et par conséquent sur le rapport cyclique du convertisseur. On constate sur ces courbes que, lors d'une communication sur le M-bus, la tension VSTC diminue et la tension d'asservissement augmente de manière à faire diminuer le rapport cyclique, et par voie de conséquence, le courant consommé.

L'intérêt de l'invention est visible sur la figure 6 qui illustre un exemple de caractéristique réelle d'un circuit intégré TSS721 configuré à deux unités de charge, avec en abscisse les valeurs de courant I tiré sur la connexion STC, et en ordonnée les valeurs de tension V_{STC}. Le point référencé Pₘₐₓ correspond à la puissance maximale susceptible d'être délivrée par le circuit intégré sur la connexion de sortie STC, soit 13,6 milliwatts dans cet exemple. On a porté en outre sur cette figure les puissances effectivement délivrées par la connexion STC dans différents cas de figures. Ainsi, le point référencé A₁ correspond à la puissance délivrée effectivement sur la connexion STC en l'absence de toute régulation, soit 6 milliwatts dans cet exemple. En effet, une marge doit être prise de manière à tenir compte du courant susceptible d'être tiré sur la broche VDD qui se retranche du courant disponible sur la connexion STC. De plus, les tolérances importantes existant sur les composants (TSS721 et transformateur pour les plus significatifs) imposent un point de fonctionnement typique très éloigné de l'optimum. En fonction des tolérances précitées, le point de fonctionnement réel pourra se rapprocher de l'optimum mais aussi s'en éloigner.

Le point référencé A₂ correspond à la puissance délivrée effectivement sur la connexion STC en effectuant une régulation classique basée sur l'utilisation d'une résistance de shunt (régulation en courant), soit 9,7 milliwatts dans cet exemple. Là aussi, une marge doit être prise de manière à tenir compte du courant susceptible d'être tiré sur la broche VDD qui se retranche du courant disponible sur la connexion STC. Ce mode de régulation permet toutefois de s'affranchir des tolérances du transformateur mais pas du TSS721. Le point de fonctionnement doit être dimensionné pour le pire cas de ce dernier et donc encore loin de l'optimum.

Enfin, le point référencé A₃ correspond à la puissance délivrée effectivement sur la connexion STC en effectuant la régulation en tension conforme à l'invention, soit 13,3 milliwatts dans cet exemple, ce qui est très proche du maximum Pₘₐₓ. Ce dernier mode de régulation exploite le courant maximum disponible sur la connexion STC indépendamment du courant tiré sur la broche VDD. De plus elle s'affranchit de la tolérance du transformateur et aussi de celle du TSS721 et assure donc un point de fonctionnement très proche de l'optimal.

## Revendications

1. Compteur d'énergie, en particulier compteur d'énergie thermique, apte à échanger des données à distance par l'intermédiaire d'une liaison M-Bus, le compteur d'énergie comprenant un module calculateur (2) susceptible d'être alimenté en puissance par la liaison M-Bus, et un circuit intégré (1) apte d'une part, à servir d'interface de communication entre le module calculateur (2) et la liaison M-Bus, et d'autre part, à délivrer sur une connexion de sortie (10), un signal de tension continue pour l'alimentation du module calculateur (2), **caractérisé en ce que** le compteur d'énergie comporte en outre un module d'alimentation en puissance (4) comprenant un convertisseur DC-DC isolé galvaniquement dont l'entrée est connectée à ladite connexion de sortie (10) et dont le rapport cyclique est régulé par le signal de tension continue.

2. Compteur d'énergie selon la revendication 1, **caractérisé en ce que** ledit convertisseur DC-DC (4) comporte un transformateur (40, 41) isolé galvaniquement, un module de commande (42) comportant un moyen interrupteur et un oscillateur commandant l'ouverture et la fermeture du moyen interrupteur selon ledit rapport cyclique, et un amplificateur opérationnel (43) qui amplifie l'écart entre la valeur du signal de tension continue et une tension de référence (V_{ref}), et dont la sortie (S_{reg}) délivre une consigne pour la régulation du rapport cyclique au module de commande (42) de manière à adapter le courant appelé en fonction de la valeur du signal de tension continue.

3. Compteur d'énergie selon l'une quelconque des revendications précédentes, **caractérisé en ce qu'**il comporte en outre un module de secours (5) se substituant au module d'alimentation en puissance (4) pour pallier les situations dans lesquelles la présence du M-bus n'est pas détectée.

## Claims

1. An energy meter, in particular a heat energy meter, capable of remotely exchanging data via an M-Bus link, the energy meter comprising a computer module (2) which may be powered by the M-Bus link, and an integrated circuit (1) capable of being used as a communications interface between the computer module (2) and the M-Bus link on the one hand, and of delivering on an output connection (10) a DC voltage signal for powering the computer module (2) on the other hand, **characterized in that** the energy meter further includes a power supply module (4) comprising a galvanically insulated DC-DC convertor, the input of which is connected to said output connection (10) and the duty cycle is regulated by the DC voltage signal.

2. The energy meter according to claim 1, **characterized in that** said DC-DC convertor (4) includes a galvanically insulated transformer (40, 41), a control module (42) including a switching means and an oscillator controlling the opening and closing of the switching means according to said duty cycle, and an operational amplifier (43) which amplifies the difference between the value of the DC voltage signal and a reference voltage (V_{ref}), and the output (S_{reg}) of which delivers a set value for regulating the duty cycle to the control module (42) so as to adapt the requested current according to the value of the DC voltage signal.

3. The energy meter according to any of the preceding claims, **characterized in that** it further includes a backup module (5) replacing the power supply module (4) for compensating for situations in which the presence of the M-Bus is not detected.

## Patentansprüche

1. Energiezähler, insbesondere Wärmeenergiezähler, der imstande ist, über eine M-Bus-Verbindung Daten in der Entfernung auszutauschen, wobei der Energiezähler ein Rechnermodul (2) umfasst, das durch die M-Bus-Verbindung mit Leistung versorgbar ist, und einen integrierten Schaltkreis (1), der einerseits imstande ist, als Kommunikationsschnittstelle zwischen dem Rechnermodul (2) und der M-Bus-Verbindung zu dienen und andererseits über eine Ausgangsverbindung (10) ein Gleichspannungssignal zur Versorgung des Rechnermoduls (2) bereitzustellen, **dadurch gekennzeichnet, dass** der Energiezähler weiterhin ein Leistungsversorgungsmodul (4) aufweist, das einen galvanisch isolierten DC/DC-Wandler umfasst, dessen Eingang mit der Ausgangsverbindung (10) verbunden ist und dessen Tastverhältnis durch das Gleichspannungssignal geregelt wird.

2. Energiezähler nach Anspruch 1, **dadurch gekennzeichnet, dass** der DC/DC-Wandler (4) einen galvanisch isolierten Transformator (40, 41), ein Steuermodul (42), das ein Unterbrechermittel und einen Oszillator aufweist, der das Öffnen und das Schließen des Unterbrechermittels gemäß Tastverhältnis steuert, und einen operativen Verstärker (43), der die Abweichung zwischen dem Wert des Gleichspannungssignals und einer Referenzspannung (V_{ref}) verstärkt, und dessen Ausgang (S_{reg}) einen Sollwert für die Regulierung des Tastverhältnisses an das Steuermodul (42) liefert, um den in Abhängigkeit vom Wert des Gleichspannungssignals aufgerufenen Strom anzupassen.

3. Energiezähler nach einem der vorangehenden Ansprüche, **dadurch gekennzeichnet, dass** er weiterhin in Sicherheitsmodul (5) aufweist, das das Leistungsversorgungsmodul (4) ersetzt, um Situationen auszugleichen, in denen die Anwesenheit des M-Busses nicht ermittelt wird.
